# EUROPEAN PATENT SPECIFICATION

(11) **EP 2 011 694 B1**
(45) Date of publication and mention of the grant of the patent: **02.09.2015**
(21) Application number: 08150832.7
(22) Date of filing: 30.01.2008
(51) Int. Cl.: B60R 9/045, B60R 9/058

(54) **Roof rail, clamping member and vehicle**
Dachschiene, Klemmelement und Fahrzeug
Longeron de toit, élément de verrouillage et véhicule

(30) Priority: 03.07.2007 EP 07111649
(43) Date of publication of application: 07.01.2009
(73) Proprietor: Volvo Car Corporation, 405 31 Göteborg (SE)
(72) Inventor: Ljungholm, Bengt, 442 91 Romelanda (SE)
(74) Representative: Valea AB

(56) References cited:
- EP-A- 1 199 220
- EP-A- 1 442 939
- WO-A-2006/130078
- WO-A1-2006/130079

## Description

### TECHNICAL FIELD

The present invention concerns a roof rail and a roof load bar for a vehicle, whereby roof rails are arranged to bear at least part of the weight of roof load bars and its load when the roof rails are arranged on the roof of a vehicle and the roof load bars are attached to the roof rails. The present invention also concerns a clamping member for use with such a roof rail and a roof load bar comprising such a clamping member. The present invention further concerns a vehicle comprising such a roof rail, roof load bar or clamping member.

### BACKGROUND OF THE INVENTION

Roof rails may be used to transport large and/or bulky items, such as bicycles, skis, canoes, luggage and other equipment or containers, on the roof of a vehicle. Many vehicles comprise two roof rails that extend in the longitudinal direction of the vehicle. Roof load bars are clamped to the roof rails and objects to be transported by the vehicle are then secured to the roof load bars. Roof load bars often comprise means, such as clamps, for rigidly securing the roof load bar to the roof rails so that it will not move during transport.

The abstract of European patent application no. EP 1153798 discloses a vehicle roof that has rails along its longitudinal edges. A roof load bar may be fastened to the rails via support feet. Each roof rail has a constriction for engagement with a tensioning clamp of a support foot. The constriction comprises vertical ribs to limit the horizontal movement of the clamp. The weight of the roof load bar is borne by the upper surface of the roof rails.

WO 2006/130078 discloses a load carrier foot for fastening a load carrier at a roof rail of a vehicle, comprising two clamping jaws arranged with an initial distance between each other which is larger than the width of the roof rails, where the load carrier foot may be located essential freely on the roof rail with the clamping jaws arranged on an opposite inside and outside of the roof rail, and a clamping means, which is arranged to move the clamping jaws against each other in such way that the load carrier foot is firmly clamped at the roof rail. The clamping jaws are made of a plate material so that the clamping jaws are elastic relative to each other and that the clamping jaws show a gripping surface adapted to the roof rail.

Conventional roof rails generally extend along the roof edges in the longitudinal direction of the vehicle on which they are provided. Conventional roof rails are usually located at a distance of about a couple of centimeters from the area where the roof of the vehicle is joined to the side panels of the vehicle. These types of roof rails are generally provided with holes, notches, indentations or the like for clamping the roof load bars onto the roof rails. In this way, the roof load bars are clamped onto the roof rails in fixed positions. Furthermore, these types of roof rails are provided with a strut that bears the weight of the roof rails and consequently of the roof load bars and any load attached thereto. For example, such struts are provided in an area above the A- and C-pillars of a vehicle. By means of these struts, the roof load bars are also arranged in a fixed position on the roof rails.

It is however desirable to allow roof load bars to be positioned in any location along the roof rails of a vehicle. It is also desirable to provide such free positioning of the roof load bars onto a type of roof rail, which is partially depressed into the area where the roof is joined to the side panels of the vehicle.

### SUMMARY OF THE INVENTION

It is thus an object of the present invention to provide a new type of roof rail and roof load bar which improve friction characteristics and which allow free positioning of roof load bars in the longitudinal direction of the vehicle.

This object is achieved by a roof rail that is arranged to bear at least part of the weight of a roof load bar and its load or an object that is to be transported on the roof of the vehicle, whereby at least one roof rail is arranged to be releasably or non-releasably attached to the roof of a vehicle and whereby at least one roof load bar is arranged to be releasably or non-releasably attached to the at least one roof rail. The roof rail includes a substantially V-shaped groove that is arranged to receive a corresponding protrusion, such as a wedge-shaped protrusion, on a roof load bar, whereby at least one surface of the substantially V-shaped groove constitutes said load-bearing surface. Alternatively, the roof rail includes a substantially V-shaped protrusion, such as a wedge-shaped protrusion, that is arranged to be inserted into a corresponding substantially V-shaped groove on a roof load bar. The V-shaped groove or V-shaped protrusion in/on the roof rail forms a first and a second load bearing surface arranged to mate with corresponding surfaces on the clamping member. The first and second load bearing surfaces are inclined at an angle of less than 90° with respect to each other, and the V-shaped groove of the roof rail is arranged to freely receive the V shaped protrusion of the clamping member or the V-shaped protrusion of the roof rail is arranged to be freely inserted into the groove of the clamping member, so that substantially the entire clamping force exerted by the clamping member on the roof rail is exerted on the first and second load bearing surfaces of the groove or the protrusion, and the first load bearing surface of the substantially V-shaped groove or protrusion is inclined at an angle of 1 - 45° to the vehicle's horizontal plane when the roof rail is mounted on a vehicle.

The V shaped groove or protrusion includes a first and a second load bearing surface which are inclined at an angle of less than 90° with respect to each other. By arranging the first and second load bearing surfaces at an angle of less than 90° with respect to each other it is ensured that substantially the entire clamping force exerted by said clamping member on said roof rail is exerted on said first and second load bearing surfaces of said groove or said protrusion. Normal forces N exerted between the V shaped groove and protrusion when the groove and the protrusion have been pressed against each other in a direction collinear or parallel to a plane bisecting the angle between the first and second load bearing surfaces, are namely larger than the force F with which the protrusion is pressed against the groove or vice versa. Said plane bisecting the angle between the first and second load bearing surfaces is a symmetry plane if the V-shaped groove or protrusion are symmetrical, which need not necessarily be the case. Preferably the first and second load bearing surfaces are inclined at an angle of between 15° and 60° with respect to each other, ensuring that the normal forces N will be at least twice as large as the force F with which the protrusion is pressed against the groove or vice versa.

In order not to substantially reduce the compressive force exerted on the inclined surfaces of the groove or the protrusion, the V shaped groove of said roof rail is arranged to freely receive said V shaped protrusion of said clamping member or said V shaped protrusion of said roof rail is arranged to be freely inserted into said groove of said clamping member. The expressions "freely receive" and "freely receive", as used in this document, are intended to mean that said roof rail and said clamping member are arranged so that when a V shaped protrusion and a V shaped groove are pressed against each other during the clamping of the clamping member to the roof rail, a substantial part, i.e. at least 80%, preferably at least 90% and most preferably at least 95% and up to 100%, of the total clamping force exerted by the clamping member on the roof rail will act on the inclined surfaces of the groove or the protrusion. In other words, forces exerted on any other part of the roof rail (or vehicle on which the roof rail is mounted) when a clamping member is clamped to the roof rail will be minimal.

The expression "clamping force" is intended to mean the compressive force that the clamping member exerts on the roof rail. The "entire clamping force" is intended to mean the total compressive force (or the sum of all compressive forces) that the clamping member exerts on the roof rail.

Since the contact between the groove and the protrusion is not hindered by any element on which part of the compressive force exerted by the clamping element could otherwise be exerted, it is ensured that substantially the entire clamping force exerted by the clamping member, if not the entire clamping force exerted by the clamping member, is exerted on the inclined surfaces of the groove or protrusion.

By the inclusion of a V shaped groove or protrusion having first and second load bearing surfaces which are inclined at an angle of less than 90 °, preferably between 15° and 60°, and by ensuring that the compressive force exerted on the inclined surfaces of the groove or protrusion is not reduced by allowing a substantial part of the compressive force exerted by the clamping member to act outside of the groove or the protrusion, large friction forces can act on the clamping member without the need for very large clamping forces or a clamping element having a considerable extension in the length direction of the roof rail.

The acceptance for large clamping forces is low, since it is required that a person having average strength must be able to lock and unlock the clamping member. Furthermore, with increased possibility to develop large friction forces without the need for increasing the locking force required, it is possible to design slimmer clamping elements, which allows for a greater freedom of design, for instance as regards the shape of the groove which may be allowed to be curved with a smaller radius of curvature as an effect of the slimmer design of the clamping element.

It is preferred that the V shaped groove or protrusion of said roof rail is positioned on a first side of the roof rail for engagement with said protrusion or groove arranged on a first leg of said clamping member and that a track is arranged on an opposite side of said roof rail for engagement with a holding member arranged on a second leg of a clamping member and that the protrusion or groove arranged on a first leg of said clamping member is formed to be the sole contact point between the roof rail and the clamping member on said first side of the roof rail at the mating point of said groove and protrusion.

By arranging the roof rail and clamping member such that a sole contact point between the roof rail and the clamping member on said first side of the roof rail is at the mating point of said groove and protrusion, the entire clamping force exerted by the clamping member will act within the groove or on the protrusion of said roof rail.

It is however possible to accept that small contact forces can act elsewhere, for instance in connection with that the clamping member is further secured from movement in the vertical direction upwards from the roof rail. Such small forces should be smaller than 20% of the clamping force, preferably less than 10% of the clamping force, still more preferably less than 5% of the clamping force.

In order to ensure that the groove or protrusion effectively scales up the normal forces in relation to the clamping force, it is preferred that the force exerted by the clamping member, that is the clamping force F, lies in a plane bisecting the angle between the first and second load bearing surfaces of the V shaped groove or V shaped protrusion. This maximizes the upscaling effect of the wedge. In the event a deviation from the plane bisecting the angle between the first and second load bearing surfaces exists, the force will be directed more closely to a perpendicular direction to the load bearing surfaces of the groove or protrusion and a reduction in the normal force will occur at one of the load bearing surfaces.

It is however possible to accept a small deviation from the plane bisecting the angle between the first and second load bearing surfaces, preferably less than 10 °, still more preferably less than 5 °.

In the event the clamping member exerts a force by a parallel translation of a first and second leg of said clamping member, where said first leg is in contact with said groove or protrusion on one side of the roof rail, and said second leg is in contact with an opposite side of said roof rail at a track arranged on said roof rail, a maximal upscaling effect is obtained in the event the track is positioned in a plane bisecting the angle between the first and second load bearing surfaces of the V shaped groove or protrusion of said roof rail.

It is however possible to accept a small deviation such that the track is positioned less than 10°, preferably less than 5 ° from a plane bisecting the angle between the first and second load bearing surfaces of the V shaped groove or protrusion of said roof rail measured from the bottom of the V shaped groove or top of the V shaped protrusion of said roof rail to the location of the track from the plane bisecting the angle between the first and second load bearing surfaces.

In the event the roof rail is adapted to be connected to a clamping member having a pivot point P for said first leg, wherein when attaching the clamping member to the roof rail, the V shaped protrusion or V shaped groove of the clamping member follows a circular path, it is preferred, in order to maximize the upscaling effect, to arrange the plane bisecting the angle between the first and second load bearing surfaces of the V shaped groove or protrusion of said roof rail coplanar with a plane following the tangent of the circular path at a position of contact between the V shaped protrusion or V shaped groove of the clamping member and the V shaped groove or protrusion of said roof rail.

It is however possible to accept a small deviation such as an angle between said plane bisecting the angle between the first and second load bearing surfaces the V shaped groove or protrusion of said roof rail and a plane following the tangent of the circular path at a position of contact between the V shaped protrusion or V shaped groove of the clamping member and the V shaped groove or protrusion of said roof rail, taken at a lateral cross section of said roof rail which is less than 10 ° preferably less than 5 °.

The construction of the roof rail gives rise to a large frictional force that will act in the longitudinal direction of the vehicle will be developed under a considerably smaller contact force needed, thereby eliminating the need for separate locks in the longitudinal direction as are required in a construction as disclosed in for instance in EP 1153798.

According to an embodiment of the invention the V-shaped groove may be rounded, it may for example have the shape of part of an ellipse, or have any other shape which gives rise to at least two contact points or surfaces between the surface(s) of a protrusion and the surfaces of the V-shaped groove when a roof load bar is attached to the roof rail. It should be noted that a protrusion need not necessarily have a V-shaped profile. The protrusion may for example have a spherical or elliptical surface and may be of any shape as long as at least two contact points or surfaces are obtained between the surface(s) of the protrusion and the surfaces of the V-shaped groove when a roof load bar or a clamping member is attached to the roof rail.

According to an embodiment of the invention the roof rail has a longitudinal extension, L, and a transverse extension, T, that extends between a first side wall and a second side wall. The roof rail includes a substantially V-shaped groove in the form of a recessed undercut in the first side wall. The recessed undercut comprises a load-bearing surface that at least partially extends within the boundaries of the maximum transverse extension, Tₘₐₓ, of the part of the roof rail overlapping the recessed undercut when the roof rail is mounted on a vehicle. According to an embodiment of the invention the recessed undercut is arranged in the side wall that is to be located closest to the centre of the roof of the vehicle, i.e. the inner side wall.

According to a further embodiment of the invention the roof rail comprises receiving means to receive a leg of a clamp that clamps the roof load bar to the roof rail. The receiving means may be located on the side wall that is to be located furthest from the centre of the roof of the vehicle, i.e. the outer side wall. Alternatively the receiving means may be located on the side wall that is to be located closest to the centre of the roof of the vehicle, i.e. the inner side wall. According to another embodiment of the invention one side of the substantially V-shaped groove, which constitutes a load-bearing surface is located substantially at the same height on the roof rail as the receiving means. This enables a roof rail to be made as compact as possible.

It should be noted that the expression "roof load bar" is intended to mean any framework, stand, grating or container that is secured to the roof of a vehicle, on, or in which articles may be placed or to which articles may be attached. The expression "roof load bar" as used in this document therefore includes roof boxes.

According to an embodiment of the invention at least one side of the substantially V-shaped groove or protrusion, i.e. a side constituting at least part of the V-shape is arranged to be vertically inclined to the vehicle's horizontal plane when the roof rail is mounted on a vehicle, i.e. the plane defined by the contact points of the vehicle's tyres with an underlying surface, when the vehicle is standing on substantially flat ground. Said at least one side of the substantially V-shaped groove or protrusion is for example vertically inclined at an angle of 1 - 45° to the vehicle's horizontal plane when the roof rail is mounted on a vehicle.

According to a further embodiment of the invention said at least one side of the substantially V-shaped groove or protrusion extends along at least part of the length of the roof rail or preferably along substantially the entire length of the roof rail, whereby the latter option enables a roof load bar or object to be attached at any position along the roof rail.

According to an embodiment of the invention the V-shaped groove or protrusion extends in a curved/non-linear manner along the length and/or breadth of said roof rail.

In all embodiments of the invention a substantially V-shaped protrusion is adapted for partial or complete insertion into a substantially V-shaped groove.

According to another embodiment of the invention the roof rail is arranged to be located in a channel/depression in the area where the roof of the vehicle is joined to the side panels of the vehicle, i.e. within 10 cm of the side edge of the roof, when mounted in a vehicle.

The present invention also concerns a clamping member for attaching a load, such as a roof load bar or any other object, such as a bicycle or a pair of skis, directly to a roof rail according to any of the embodiments of the invention. The clamping member comprises a first leg having a distal end comprising a substantially V-shaped protrusion, such as a wedge-shaped protrusion, or a substantially V-shaped groove having a lower downwardly-facing surface and an upper upwardly-facing locking surface when mounted on a roof rail, whereby the downwardly- and upwardly-facing surfaces minimize or prevent the movement of the load and whereby said protrusion or said groove is adapted to mate with a corresponding substantially V-shaped groove or substantially V-shaped protrusion of said roof rail. The substantially V-shaped protrusion will have at least two surfaces in contact with two surfaces of a substantially V-shaped groove when a roof load bar is attached to the roof rail, thereby increasing the contact surface area between the protrusion and the groove. At least one of these surfaces may be arranged to have a high coefficient of friction, by lining the at least one surface with a material such as rubber, or by increasing its roughness for example, to allow loads to be borne on the roof rail without sliding in the longitudinal direction of the vehicle when the vehicle is moving.

According to an embodiment of the invention the clamping member comprises a second leg that is arranged to clamp the clamping member onto the roof rail.

According to another embodiment of the invention the clamping member comprises tightening means, such as a threaded member, or clamping means for adjusting the distance between the first and second legs to tighten the clamping member to the roof rail.

According to an embodiment of the invention the clamping member comprises means to attach itself to an object such as a roof load bar or any other object that is to be transported on the roof rail of a vehicle.

The present invention also concerns a roof load bar, a roof box or roof rack for a vehicle for use with a roof rail according to any of the embodiments of the invention, whereby the roof load bar comprises a clamping member according to any of the embodiments of the invention. According to an embodiment of the invention the clamping member is integrally formed with the roof load bar or merely attached thereto.

The present invention also concerns a vehicle, such as a passenger car, especially an estate car, which comprises a roof rail, a clamping member or a roof load bar according to any of the embodiments of the invention. The roof rail may be mounted on the roof of the vehicle, or integrally formed with part of the vehicle, such as its roof or door frame.

### BRIEF DESCRIPTION OF THE DRAWINGS

The present invention will hereinafter be further explained by means of non-limiting examples with reference to the appended mostly schematic figures where;
Figure 1 shows a vehicle comprising a roof rail according to an embodiment of the invention,
Figure 2 shows the roof of a vehicle on which a roof load bar according to an embodiment of the invention has been mounted,
Figure 3 shows the contact surfaces of a roof rail and a roof load bar according to first and second embodiments of the invention,
Figure 4 shows how a roof load bar or a clamping member may be attached to a roof rail according to an embodiment of the invention,
Figure 5 shows a clamping member for attaching an object to a roof rail according to an embodiment of the invention,
Figure 6 shows a schematic drawing explaining the upscaling effect of the Normal force, and
Figure 7 shows an example of how the plane bisecting the angle between the first and second load bearing surfaces should be inclined in the case the clamping member has a leg which follows a curved path when engaging the roof rail.

It should be noted that the drawings have not necessarily been drawn to scale and that the dimensions of certain features may have been exaggerated for the sake of clarity.

### DETAILED DESCRIPTION OF EMBODIMENTS

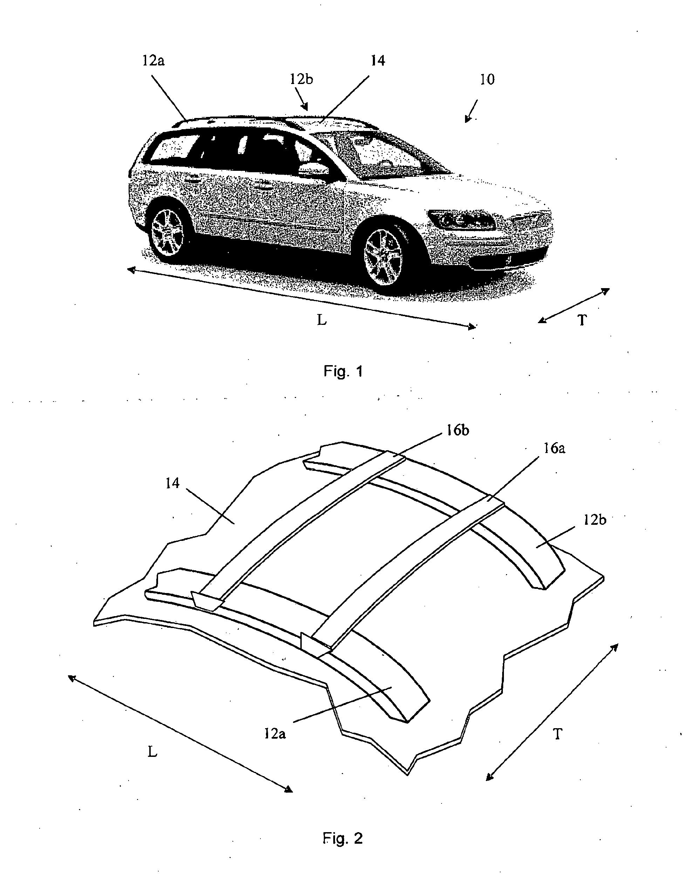

Figure 1 shows a vehicle 10 comprising two roof rails 12 which are integrated with the roof 14 of the vehicle 10. Each roof rail 12 extends in the longitudinal direction, L, of the vehicle and is located on a longitudinal side of the roof 14 of the vehicle 10. A roof rail 12 may however be placed anywhere on the roof 14 of the vehicle and it need not necessarily extend in a substantially straight line. Each roof rail 12 may be a multipart construction, but preferably consists of one piece, such as a single section of a metal tube. The roof rails 12 are fastened on top of the roof 14 of the vehicle 10, or in a channel in the roof 14 of the vehicle, at their front and rear downwardly-sloping regions by means of gluing, soldering, screwing or welding for example. Alternatively the roof rails 12 are fastened to vehicle pillars, such as the A- and C-pillar of the vehicle 10. It should be noted that the roof rails 12 need not necessarily be located at a distance from the top of the roof 14 of the vehicle 10 as exemplified in figure 1; the roof rails 12 may namely be placed immediately adjacent to the top of the roof 14, i.e. without a gap between the roof rails 12 and the top of the roof 14 in a channel/depression in the area where the roof is joined to the side panels of the vehicle.

Figure 2 shows the roof 14 of a vehicle on which two roof rails 12a, 12b extend in the longitudinal direction L of the vehicle; one on each of the longitudinal sides of the roof 14. Two detachable transverse roof load bars 16a, 16b are attached to the roof rails 12a, 12b.

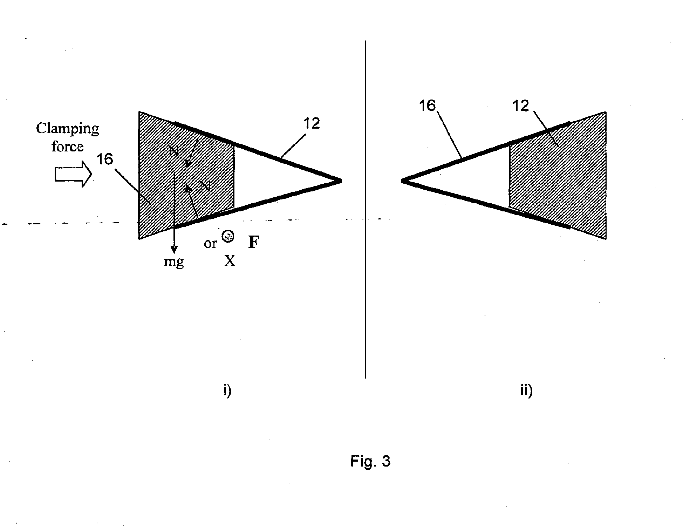

Figure 3 i) shows a first embodiment of the invention in which a roof rail 12 is provided with substantially V-shaped groove that is arranged to mate with a corresponding substantially V-shaped protrusion on the leg of a roof load bar 16. Figure 3 ii) shows a second embodiment of the invention in which a roof rail 12 is provided with substantially V-shaped protrusion that is arranged to mate with a corresponding substantially V-shaped groove on the leg of a roof load bar 16. A normal force, N, is always directed perpendicular to the plane of contact between the roof rail 12 and the roof load bar 16.

By providing a roof rail 12 or a roof load bar 16 with a substantially V-shaped groove or protrusion, a frictional force, F, whose magnitude is proportional to the normal force, N, will act in the longitudinal direction of the vehicle (i.e. into or out of the plane of the paper depending on whether the vehicle is accelerating or decelerating) as indicated in figure 3 i) and 3 ii). The frictional force, F, will minimize or prevent the movement of the roof load bar 16 and its load in the longitudinal direction of the vehicle during transport. It should be noted that the sides constituting the V-shape of the groove or the protrusion need not necessarily be planar; they may be curved. The V-shaped protrusion may form a substantially conical shape comprising a plurality of sides that are arranged to mate with a correspondingly formed conical groove. Furthermore, the protrusion may have any shape as long as at least two contact points or surfaces are obtained between the surface(s) of the protrusion and the surfaces of the substantially V-shaped groove.

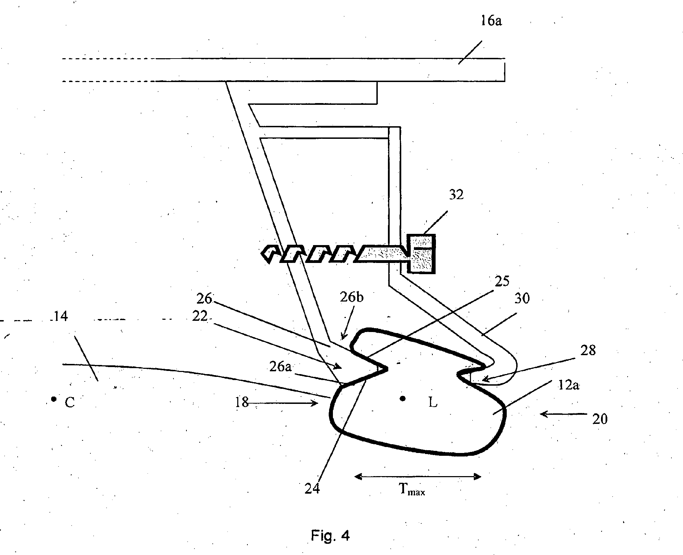

Figure 4 shows how one end of a roof load bar 16a of a roof load bar 16 may be attached to a roof rail 12a according to an embodiment of the invention. The roof rail 12a has a transverse extension that extends between an inner side wall 18 and an outer side wall 20, whereby the inner side wall 18 is located closest to the centre C of the roof 14. It should be noted that the roof rail 12a may be of any shape, it may for example be of substantially circular cross-section whereby the expression "side wall" is intended to mean a part at the side of the substantially circular roof rail 12a. Preferably, the roof rails are arranged in a depression in the area where the roof is joined to the side panels of the vehicle.

The roof rail 12a includes a recessed undercut 22 in the inner side wall 18. The recessed undercut 22 comprises a first load-bearing surface 24 that at least partially extends within the boundaries of the maximum transverse extension, Tₘₐₓ, of the part of the roof rail 12a that overlaps the recessed undercut 22 (said boundaries indicated by the ends of the double-headed arrow in figure 4). The maximum transverse extension, Tₘₐₓ, may be 3 - 10 cm, whereby the recessed undercut 22 may extend 2-6 cm within the boundaries of the maximum transverse extension, Tₘₐₓ, and, optionally, 2-6 cm outside the boundaries to facilitate mounting of the roof load bar on the roof rail 12a, i.e. to decrease the risk of the paintwork of the vehicle being scratched or the roof of the vehicle being dented as the roof load bar is attached to the roof rails. The height of the roof rail 12a above the roof section on which it is mounted may be 3 - 10 cm. At least substantial part of the weight of the roof load bar 16 that is attached to the roof rail 12a will be borne by that first load-bearing surface 24.

In the illustrated embodiment the recessed undercut 22 is constituted by a substantially V-shaped groove that is arranged to receive a corresponding wedge-shaped protrusion 26 that is provided on the foot of the roof load bar 16. A lower downwardly-facing surface 26a of the protrusion is arranged to lie on the first load-bearing surface 24 of the roof rail 12a, whereby at least a substantial part of the weight of the roof load bar will be borne by the first load-bearing surface 24 of the roof rail 12a when the roof load bar is attached to the roof rail 12a. The protrusion 26 also comprises an upper upwardly-facing locking surface 26b to prevent or minimize movement of the roof load bar 16. The locking surface 26b is arranged to abut against a second surface 25 of the groove, whereby the protrusion 26 will have two surfaces 26a, 26b in contact with two surfaces 24, 25 of the substantially V-shaped groove 26 of the roof rail 12a when the roof load bar is attached to the roof rail.

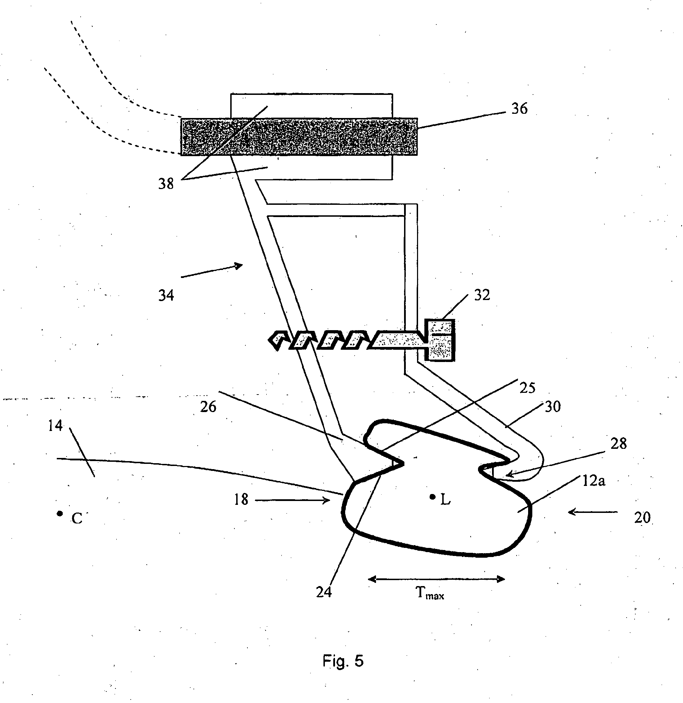

The first load-bearing surface 24 of the roof rail 12a is vertically inclined with respect to the horizontal plane (not shown) of the vehicle. The first load-bearing surface 24 may be inclined at an angle of 1 - 45° to horizontal plane of the vehicle. The angle between the first load-bearing surface 24 and the second surface 25 may be 15-60°. The second surface 25 may be arranged to be substantially parallel to the horizontal plane of the vehicle or may be arranged to be vertically inclined at an angle of 1 - 45° thereto. The first load-bearing surface 24 may extend along just part of the length of the roof rail 12a in the longitudinal direction of the car or it may extend along the entire length of the roof rail 12a. The first load-bearing surface 24 of the roof rail 12a may extend in a curved/non-linear manner along the length and/or breadth of the roof rail 12a. It should therefore be noted that the cross-section of the roof rail 12 need not necessarily be uniform along the entire length of the roof rail 12a and that the roof rail cross section that is shown in figures 4 and 5 is the cross section at one part of the roof rail 12a only.

The roof rail 12a also comprises receiving means 28 to receive a leg of a clamp 30 that is integrally formed with the end of the roof load bar 16a and that clamps the roof load bar to the roof rail 12a. The first load bearing surface 24 is located on the inner side wall 18 of the roof rail 12a and the receiving means 28 are located on the outer side wall 20 opposite the first load bearing surface 24 and substantially at the at the same height on the roof rail 12a as the first load bearing surface 24. The clamp 30 comprises tightening means 32, such as a threaded member, for tightening the roof load bar around the roof rail 12a. No special tool is therefore required to attach or detach the roof load bar 16 from the roof rail 12 and the clamp 30 and tightening means 32 are easily accessible.

Figure 5 shows a clamping member 34 for attaching an object 36, such as the handlebar of an inverted bicycle (not shown) to a roof rail 12a. The clamping member 34 comprises means 38, such as lockable jaws that firmly grip the object 36 and thereby attach the clamping member to the object 36. The attachment means 38 may be slidably mounted to facilitate the attachment of an object 36 whose transverse extension is less than the distance between two roof rails. The clamping member 34 comprises a foot having a protrusion 26. A lower downwardly-facing surface 26a of the protrusion 26 is arranged to lie on a first load-bearing surface 24 of the roof rail 12a, whereby at least a substantial part of the weight of the object 36 will be borne by the first load-bearing surface 24 of the roof rail 12a when the object 36 is attached to the roof rail 12a. An upper upwardly-facing locking surface 26b of the protrusion 26 prevents or minimizes movement of the roof rail 16 when the protrusion 26 has been inserted into the V-shaped groove of the roof rail 12a. The clamping member 34 is clamped to the roof rail 12a by means of a clamp 30. The clamping member 34 may comprise a cover, such as a plastic cover that is designed to improve the vehicle's external appearance and/or aerodynamics, and/or which prevents the clamping member from becoming dirty and consequently facilitates long term use.

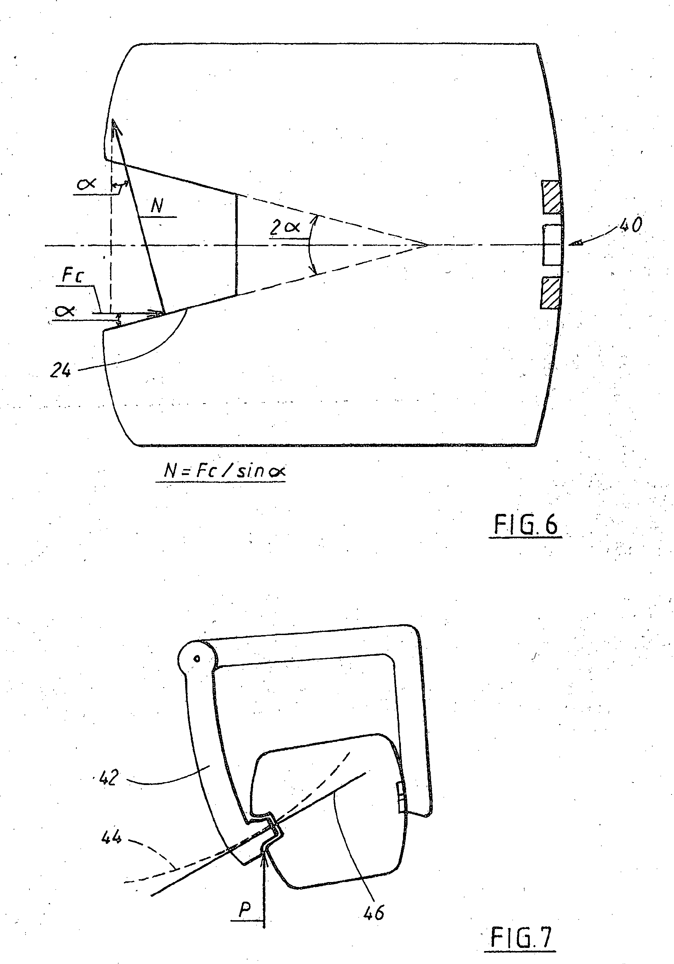

In figure 6 a schematic drawing explaining the upscaling effect of the normal force is shown. A clamping force Fc is exerted by a clamping member 34. As a reaction to the clamping force a normal force N will develop, the normal force being normal to the plane defined by a first load bearing surface 24 of the groove. In order for the normal force N to balance the clamping force Fc the normal force N shall fulfil the following requirement:
Fc = N sin α, where α is half the angle between the first and second load bearing surfaces of the V shaped groove, in the event the V shaped groove is symmetrical, which need not necessarily be the case.

Hence the normal force assumes the magnitude of N =Fc/sin α. In the event the angle between the first and second load bearing surfaces is smaller than 60° it is ensured that the normal force is at least twice as large as the clamping force.

In the figure it is also shown that a track 40 for attachment of a second leg of a clamping member is positioned in the plane bisecting the angle between the first and second load bearing surfaces, namely in the symmetry plane of the V shaped groove. This ensures that the upscaling effect will not decrease at one of the load bearing surfaces 24, 25, which would be the result if the clamping force were not to lie in the symmetry plane.

In the event the leg 42 of the clamping member which engages with the groove follows a circular path 44, the tangent 46 of the path at the contact point P between the V shaped groove and V shaped protrusion should lie in the symmetry plane. This is shown in figure 7.

In figure 7 it is also shown that the sole contact between the roof rail and the clamping member at the side of the roof rail where the V shaped groove or protrusion is located occurs at the mating point P of the groove and protrusion. Hence the complete force exerted by the clamping member acts in the mating between the V shaped groove and protrusion.

Even if it is preferred that the sole contact between the clamping member and the roof rail at the side where the V shaped groove is situated takes place in the mating between the V shaped groove and corresponding protrusion, it is acceptable that a small part of the force field exerted by the clamping member, at the side where the V shaped groove, is situated is located outside of the mating between the V-shaped groove and corresponding recess.

Hence it is acceptable that at least 80%, preferably at least 90% and still more preferably at least 95% of the force field exerted by the clamping member acts in the mating between the V shaped groove and corresponding protrusion. This is achieved by ensuring that at least 80%, preferably 90%, still more preferably 95% of the contact area between the clamping member at the side of the roof rail where the V shaped groove is situated in a projection perpendicular to the direction of the clamping force exerted by the clamping member is constituted by the mating between the V shaped groove and corresponding protrusion. Here by the force field exerted by the clamping member is intended the force generated by the clamping action of the clamping member. It is preferred that the clamping member has the sole contact to the roof rail in the mating between the V shaped groove and corresponding protrusion at one side of the roof rail and in the track for attachment on the other opposite side of the roof rail.

The clamping member may be allowed to include a portion which rests on a top part of the roof rail and which is acted upon by gravity forces as long as such portion does not substantially interfere with the clamping force exerted by the clamping member. Even though gravity forces generate a force field downwardly in the vertical direction, the gravity forces can not be relied upon for generation of a friction force for locking a member to the rail, since dynamical forces occurring when the vehicle is in motion may counteract the gravity forces such that the contact force will be too low for generating a sufficient friction force. In order to ensure the presence of a sufficiently large friction force it is necessary to rely on the clamping force exerted by the clamping member.

Even though figures 6 and 7 are described with the inclusion of a V shaped groove situated on the roof rail and a corresponding V shaped protrusion on the clamping member, it is possible to locate the protrusion on the roof rail and the groove on the clamping member while achieving the same result.

The invention thus relates to two embodiments. In a first embodiment the groove is situated on the roof rail:
Roof rail for a vehicle, which roof rail is arranged to bear at least part of the weight of a roof load bar, i.e. part of any framework, stand grating or container, that is secured on the roof of a vehicle on, or in which articles may be placed or to which articles may be attached, wherein the roof rail includes a substantially V shaped groove that is arranged to receive a corresponding protrusion, such as a wedge shaped protrusion, on a clamping member of a roof load bar; that said substantially V shaped groove in the roof rail forms a first and a second load bearing surface arranged to mate with corresponding surfaces on said clamping member, characterized in that said first and second load bearing surfaces are inclined at an angle of less than 90° with respect to each other, and that said V shaped groove of said roof rail is arranged to freely receive said V shaped protrusion of said clamping member.

In a second embodiment the groove is situated on the clamping member:
Roof rail for a vehicle, which roof rail is arranged to bear at least part of the weight of a roof load bar, i.e. part of any framework, stand, grating or container, that is secured on the roof of a vehicle on, or in which articles may be placed or to which articles may be attached, wherein the roof rail includes a substantially V shaped protrusion that is arranged to be inserted into a corresponding substantially V shaped groove on clamping member of a roof load bar; that said V shaped protrusion on the roof rail forms a first and a second load bearing surface arranged to mate with corresponding surfaces on said clamping member, characterized in that said first and second load bearing surfaces are inclined at an angle of less than 90° with respect to each other, and that said V shaped protrusion of said roof rail is arranged to be freely inserted into said groove of said clamping member.

Both embodiments may also include the features of the dependent claims.

## Claims

1. Roof rail (12) for a vehicle (10), which roof rail (12) is arranged to bear at least part of the weight of a roof load bar (16), i.e. part of any framework, stand, grating or container, that is secured on the roof of a vehicle (10) on, or in which articles may be placed or to which articles may be attached, wherein the roof rail (12) includes a substantially V shaped groove that is arranged to receive a corresponding protrusion (26), such as a wedge shaped protrusion, on a clamping member (34) of a roof load bar (16), or that the roof rail (12) includes a substantially V shaped protrusion that is arranged to be inserted into a corresponding substantially V shaped groove on clamping member (34) of a roof load bar (16);
said V shaped groove or V shaped protrusion (26) in/on the roof rail (12) forming a first and a second load bearing surface (24, 25) arranged to mate with corresponding surfaces on said clamping member (34), **characterized in that**
said first and second load bearing surfaces (24, 25) are inclined at an angle of less than 90° with respect to each other, and that said V shaped groove of said roof rail (12) is arranged to freely receive said V shaped protrusion (26) of said clamping member (34) or said V shaped protrusion of said roof rail (12) is arranged to be freely inserted into said groove of said clamping member (34), so that substantially the entire clamping force exerted by said clamping member (34) on said roof rail (12) is exerted on said first and second load bearing surfaces (24, 25) of said groove or said protrusion (26), and said first load bearing surface (24) of the substantially V-shaped groove or protrusion (26) is inclined at an angle of 1 - 45° to said vehicle's horizontal plane when the roof rail (12) is mounted on a vehicle (10).

2. Roof rail (12) according to claim 1, **characterized in that** said first and a second load bearing surfaces (24, 25) are inclined at an angle of 15° to 60° with respect to each other.

3. Roof rail (12) according to claim 1 or 2, **characterized in that** said V shaped groove of said roof rail (12) is arranged to freely receive said V shaped protrusion (26) of said clamping member (34) or said V shaped protrusion (26) of said roof rail (12) is arranged to be freely inserted into said groove of said clamping member (34) so that at least 80% of the clamping force exerted by said clamping member (34) on said roof rail (12) is exerted on said load bearing surfaces (24, 25) of said groove or said protrusion (26).

4. Roof rail (12) according to claim 1 or 2, **characterized in that** said V shaped groove of said roof rail (12) is arranged to freely receive said V shaped protrusion (26) of said clamping member (34) or said V shaped protrusion (26) of said roof rail (12) is arranged to be freely inserted into said groove of said clamping member (34) so that at least 90% of the clamping force exerted by said clamping member (34) on said roof rail (12) is exerted on said load bearing surfaces (24, 25) of said groove or said protrusion (26).

5. Roof rail (12) according to claim 1 or 2, **characterized in that** said V shaped groove of said roof rail (12) is arranged to freely receive said V shaped protrusion (26) of said clamping member (34) or said V shaped protrusion (26) of said roof rail (12) is arranged to be freely inserted into said groove of said clamping member (34) so that at least 95% of the clamping force exerted by said clamping member (34) on said roof rail (12) is exerted on said load bearing surfaces (24, 25) of said groove or said protrusion (26).

6. Roof rail (12) according to any of the previous claims, **characterized in that** said V shaped groove or protrusion (26) of said roof rail (12) is positioned on a first side of the roof rail (12) for engagement with said protrusion (26) or groove arranged on a first leg of said clamping member (34) and that a track (40) is arranged on an opposite side of said roof rail (12) for engagement with a holding member arranged on a second leg of a clamping member (34).

7. Roof rail (12) according to claim 6, **characterized in that** said protrusion (26) or groove arranged on a first leg of said clamping member (34) is formed to be the sole contact point between the roof rail (12) and the clamping member (34) on said first side of the roof rail (12) which is at the mating point of said groove and protrusion (26), so that substantially the entire clamping force exerted by said clamping member (34) on said roof rail (12) is exerted on said load bearing surfaces (24, 25) of said groove or said protrusion (26).

8. Roof rail (12) according to claim 6 or 7, **characterized in that** said track (40) is positioned substantially in a plane bisecting the angle (2α) between said first and second load bearing surfaces (24, 25) of the V shaped groove or protrusion (26) of said roof rail (12).

9. Roof rail (12) according to claim 6 or 7, **characterized in that** said track (40) is positioned less than 10° from a plane bisecting the angle (2α) between the first and second load bearing surfaces (24, 25) of the V shaped groove or protrusion (26) of said roof rail (12) measured from the bottom of the V shaped groove or top of the V shaped protrusion (26) of said roof rail (12) to the location of the track (40).

10. Roof rail (12) according to claim 6 or 7, **characterized in that** said track (40) is positioned less than 5° from a plane bisecting the angle (2α) between the first and second load bearing surfaces (24, 25) of the V shaped groove or protrusion (26) of said roof rail (12) measured from the bottom of the V shaped groove or top of the V shaped protrusion (26) of said roof rail (12) to the location of the track (40).

11. Roof rail (12) according to claim 6 or 7, **characterized in that** said roof rail (12) is adapted to be connected to a clamping member (34) having a pivot point P for said first leg, wherein when attaching the clamping member (34) to the roof rail (12), the V shaped protrusion (26) or V shaped groove of the clamping member (34) follows a circular path (44), wherein said adaptation consists of arranging the plane bisecting the angle (2α) between the first and second load bearing surfaces (24, 25) of the V shaped groove or protrusion (26) of said roof rail (12) subtstantially coplanar with a plane following the tangent (46) of the circular path (44) at a position of contact between the V shaped protrusion (26) or V shaped groove of the clamping member (34) and the V shaped groove or protrusion (26) of said roof rail (12).

12. Roof rail (12) according to claim 11, **characterized in that** an angle between said plane bisecting the angle (2α) between the first and second load bearing surfaces (24, 25) the V shaped groove or protrusion (26) of said roof rail (12) and a plane following the tangent (46) of the circular path (44) at a position of contact between the V shaped protrusion (26) or V shaped groove of the clamping member (34) and the V shaped groove or protrusion (26) of said roof rail (12), taken at a lateral cross section of said roof rail (12) is less than 10 °.

13. Roof rail (12) according to claim 11, **characterized in that** an angle between said plane bisecting the angle (2α) between the first and second load bearing surfaces (24, 25) the V shaped groove or protrusion (26) of said roof rail (12) and a plane following the tangent (46) of the circular path (44) at a position of contact between the V shaped protrusion (26) or V shaped groove of the clamping member (34) and the V shaped groove or protrusion (26) of said roof rail (12), taken at a lateral cross section of said roof rail (12) is less than 5 °.

14. Roof rail (12) according to any of the previous claims, **characterized in that** it has a longitudinal extension L and a transverse extension T that extends between a first side wall (18) and a second side wall (20) and includes a recessed undercut (22) in the first side wall (18), which recessed undercut (22) forms said V shaped groove and comprises a first load-bearing surface (24) that at least partially extends within the boundaries of the maximum transverse extension, Tₘₐₓ, of the part of the roof rail (12) overlapping said recessed undercut (22) when the roof rail (12) is mounted on a vehicle (10).

15. Roof rail (12) according to any of the preceding claims, **characterized in that** said load bearing surface (24) of the substantially V-shaped groove or protrusion (26) is arranged to be vertically inclined with respect to said vehicle's horizontal plane when the roof rail (12) is mounted on a vehicle (10).

16. Roof rail (12) according to claim 14, **characterized in that** said first side wall (18) is arranged to be located closest to the centre (C) of the roof (14) of the vehicle (10).

17. Roof rail (12) according to claim 14, **characterized in that** said first load-bearing surface (24) is located substantially at the same height on the roof rail (12) as receiving means (28).

18. Roof rail (12) according to any of the preceding claims, **characterized in that** said first load bearing surface (24) of the substantially V-shaped groove or protrusion (26) extends along at least part of the length of the roof rail (12) or preferably along substantially the entire length of the roof rail (12).

19. Roof rail (12) according to any of the preceding claims, **characterized in that** said V-shaped groove or protrusion (26) extends in a curved/non-linear manner along the length and/or breadth of said roof rail (12).

20. Roof rail (12) according to any of the preceding claims, **characterized in that** it is arranged to be located in a channel in the area where the roof of the vehicle is joined to the side panels of the vehicle, when mounted in a vehicle (10).

21. Roof rail (12) according to any of the preceding claims, **characterized in that** said substantially V-shaped groove is rounded, or has a shape which gives rise to at least two contact surfaces between the surface(s) of a protrusion (26) and the surfaces of the substantially V-shaped groove when a roof load bar (16) or clamping member (34) is attached to the roof rail (12).

22. Clamping member (34) for attaching a load (16, 36) to a roof rail (12) according to any of the preceding claims **characterized in that** the clamping member (34) comprises a first leg having a distal end comprising a substantially V-shaped protrusion (26), such as a wedge-shaped protrusion (26), or a substantially V-shaped groove having a lower downwardly-facing surface (26a) and an upper upwardly-facing locking surface (26b), whereby said protrusion (26) or said groove is adapted to mate with a corresponding substantially V-shaped groove or substantially V-shaped protrusion (26) of said roof rail (12).

23. Clamping member (34) according to claim 22, **characterized in that** it comprises a second leg (30) that is arranged to clamp said clamping member (34) onto said roof rail (12).

24. Clamping member (34) according to claim 23, **characterized in that** it comprises tightening means (32), such as a threaded member, for adjusting the distance between said first and second legs.

25. Clamping member (34) according to any of claims 22-24, **characterized in that** it comprises means (38) to attach the clamping member (34) to an object (36).

26. Roof load bar (16) for a vehicle for use with a roof rail (12) according to any of the preceding claims, **characterized in that** it comprises a clamping member (34) according to any of claims 22-25.

27. Roof load bar (16) according to claim 26, **characterized in that** said clamping member (34) is integrally formed with the roof load bar (16).

28. Vehicle (10), **characterized in that** it comprises a roof rail (12) according to any of claims 1-21, a clamping member (34) according to any of claims 22-25 or a roof load bar according to claim 26 or 27.

## Patentansprüche

1. Dachreling (12) für ein Fahrzeug (10), wobei die Dachreling (12) dafür ausgelegt ist, wenigstens einen Teil des Gewichts eines Dachträgers (16), d. h. einen Teil irgendeines an dem Dach eines Fahrzeugs (10) befestigten Gerüsts, Ständers, Gitters oder Behälters, an dem oder in dem Artikel angeordnet werden können oder an dem Artikel angebracht werden können, zu tragen, wobei die Dachreling (12) eine im Wesentlichen V-förmige Nut enthält, die dafür ausgelegt ist, einen entsprechenden Vorsprung (26) wie etwa einen keilförmigen Vorsprung an einem Klemmelement (34) eines Dachträgers (16) aufzunehmen, oder wobei die Dachreling (12) einen im Wesentlichen V-förmigen Vorsprung enthält, der dafür ausgelegt ist, in eine entsprechende im Wesentlichen V-förmige Nut an einem Klemmelement (34) eines Dachträgers (16) eingeführt zu werden;
wobei die V-förmige Nut oder der V-förmige Vorsprung (26) in/an der Dachreling (12) eine erste und eine zweite lasttragende Oberfläche (24, 25) bildet, die dafür ausgelegt ist, zu entsprechenden Oberflächen an dem Klemmelement (34) zu passen, **dadurch gekennzeichnet, dass**
die erste und die zweite lasttragende Oberfläche (24, 25) unter einem Winkel von weniger als 90° in Bezug zueinander geneigt sind und dass die V-förmige Nut der Dachreling (12) so ausgelegt ist, dass sie den V-förmigen Vorsprung (26) des Klemmelements (34) frei aufnimmt, oder dass der V-förmige Vorsprung der Dachreling (12) so ausgelegt ist, dass er in die Nut des Klemmelements (34) frei eingeführt wird, so dass im Wesentlichen die gesamte durch das Klemmelement (34) auf die Dachreling (12) ausgeübte Klemmkraft auf die erste und auf die zweite lasttragende Oberfläche (24, 25) der Nut oder des Vorsprungs (26) ausgeübt wird, und wobei die erste lasttragende Oberfläche (24) der im Wesentlichen V-förmigen Nut oder des im Wesentlichen V-förmigen Vorsprungs (26) unter einem Winkel von 1 - 45° gegen die Horizontalebene des Fahrzeugs geneigt ist, wenn die Dachreling (12) an einem Fahrzeug (10) montiert ist.

2. Dachreling (12) nach Anspruch 1, **dadurch gekennzeichnet, dass** die erste und eine zweite lasttragende Oberfläche (24, 25) in Bezug zueinander unter einem Winkel von 15° bis 60° geneigt sind.

3. Dachreling (12) nach Anspruch 1 oder 2, **dadurch gekennzeichnet, dass** die V-förmige Nut der Dachreling (12) dafür ausgelegt ist, den V-förmigen Vorsprung (26) des Klemmelements (34) frei aufzunehmen, oder der V-förmige Vorsprung (26) der Dachreling (12) dafür ausgelegt ist, in die Nut des Klemmelements (34) frei eingeführt zu werden, so dass wenigstens 80 % der durch das Klemmelement (34) auf die Dachreling (12) ausgeübten Klemmkraft auf die lasttragenden Oberflächen (24, 25) der Nut oder des Vorsprungs (26) ausgeübt wird.

4. Dachreling (12) nach Anspruch 1 oder 2, **dadurch gekennzeichnet, dass** die V-förmige Nut der Dachreling (12) dafür ausgelegt ist, den V-förmigen Vorsprung (26) des Klemmelements (34) frei aufzunehmen, oder der V-förmige Vorsprung (26) der Dachreling (12) dafür ausgelegt ist, in die Nut des Klemmelements (34) frei eingeführt zu werden, so dass wenigstens 90 % der durch das Klemmelement (34) auf die Dachreling (12) ausgeübten Klemmkraft auf die lasttragenden Oberflächen (24, 25) der Nut oder des Vorsprungs (26) ausgeübt wird.

5. Dachreling (12) nach Anspruch 1 oder 2, **dadurch gekennzeichnet, dass** die V-förmige Nut der Dachreling (12) dafür ausgelegt ist, den V-förmigen Vorsprung (26) des Klemmelements (34) frei aufzunehmen, oder der V-förmige Vorsprung (26) der Dachreling (12) dafür ausgelegt ist, in die Nut des Klemmelements (34) frei eingeführt zu werden, so dass wenigstens 95 % der durch das Klemmelement (34) auf die Dachreling (12) ausgeübten Klemmkraft auf die lasttragenden Oberflächen (24, 25) der Nut oder des Vorsprungs (26) ausgeübt wird.

6. Dachreling (12) nach einem der vorhergehenden Ansprüche, **dadurch gekennzeichnet, dass** die V-förmige Nut oder der V-förmige Vorsprung (26) der Dachreling (12) auf einer ersten Seite der Dachreling (12) für den Eingriff mit dem Vorsprung (26) oder mit der Nut, der bzw. die an einem ersten Schenkel des Klemmelements (34) angeordnet ist, positioniert ist und dass auf einer gegenüberliegenden Seite der Dachreling (12) eine Spur (40) für den Eingriff mit einem an einem zweiten Schenkel eines Klemmelements (34) angeordneten Halteelement angeordnet ist.

7. Dachreling (12) nach Anspruch 6, **dadurch gekennzeichnet, dass** der Vorsprung (26) oder die Nut, der bzw. die an einem ersten Schenkel des Klemmelements (34) angeordnet ist, als der einzige Berührungspunkt zwischen der Dachreling (12) und dem Klemmelement (34) auf der ersten Seite der Dachreling (12) gebildet ist, der an dem Kontaktpunkt der Nut und des Vorsprungs (26) ist, so dass im Wesentlichen die gesamte durch das Klemmelement (34) auf die Dachreling (12) ausgeübte Klemmkraft auf die lasttragenden Oberflächen (24, 25) der Nut oder des Vorsprungs (26) ausgeübt wird.

8. Dachreling (12) nach Anspruch 6 oder 7, **dadurch gekennzeichnet, dass** die Spur (40) im Wesentlichen in einer Ebene positioniert ist, die den Winkel (2α) zwischen der ersten und der zweiten lasttragenden Oberfläche (24, 25) der V-förmigen Nut oder des V-förmigen Vorsprungs (26) der Dachreling (12) halbiert.

9. Dachreling (12) nach Anspruch 6 oder 7, **dadurch gekennzeichnet, dass** die Spur (40) weniger als 10° von einer Ebene positioniert ist, die den Winkel (2α) zwischen der ersten und der zweiten lasttragenden Oberfläche (24, 25) der V-förmigen Nut oder des V-förmigen Vorsprungs (26) der Dachreling (12), gemessen von der Unterseite der V-förmigen Nut oder von der Oberseite des V-förmigen Vorsprungs (26) der Dachreling (12) zum Ort der Spur (40), halbiert.

10. Dachreling (12) nach Anspruch 6 oder 7, **dadurch gekennzeichnet, dass** die Spur (40) weniger als 5° von einer Ebene positioniert ist, die den Winkel (2α) zwischen der ersten und der zweiten lasttragenden Oberfläche (24, 25) der V-förmigen Nut oder des V-förmigen Vorsprungs (26) der Dachreling (12), gemessen von der Unterseite der V-förmigen Nut oder von der Oberseite des V-förmigen Vorsprungs (26) der Dachreling (12) zum Ort der Spur (40), halbiert.

11. Dachreling (12) nach Anspruch 6 oder 7, **dadurch gekennzeichnet, dass** die Dachreling (12) dafür ausgelegt ist, mit einem Klemmelement (34) verbunden zu werden, das einen Schwenkpunkt P für den ersten Schenkel aufweist, wobei der V-förmige Vorsprung (26) oder die V-förmige Nut des Klemmelements (34) beim Anbringen des Klemmelements (34) an der Dachreling (12) einem kreisförmigen Weg (44) folgt, wobei die Auslegung darin besteht, die Ebene, die den Winkel (2α) zwischen der ersten und der zweiten lasttragenden Oberfläche (24, 25) der V-förmigen Nut oder des V-förmigen Vorsprungs (26) der Dachreling (12) halbiert, mit einer Ebene, die an einer Berührungsstelle zwischen dem V-förmigen Vorsprung (26) oder der V-förmigen Nut des Klemmelements (34) und der V-förmigen Nut oder dem V-förmigen Vorsprung (26) der Dachreling (12) der Tangente (46) des kreisförmigen Wegs (44) folgt, im Wesentlichen koplanar anzuordnen.

12. Dachreling (12) nach Anspruch 11, **dadurch gekennzeichnet, dass** ein Winkel zwischen der Ebene, die den Winkel (2α) zwischen der ersten und der zweiten lasttragenden Oberfläche (24, 25) der V-förmigen Nut oder des V-förmigen Vorsprungs (26) der Dachreling (12) halbiert, und einer Ebene, die an einer Berührungsstelle zwischen dem V-förmigen Vorsprung (26) oder der V-förmigen Nut des Klemmelements (34) und der V-förmigen Nut oder dem V-förmigen Vorsprung (26) der Dachreling (12) der Tangente (46) des kreisförmigen Wegs (44) folgt, gebildet bei einem seitlichen Querschnitt der Dachreling (12), kleiner als 10° ist.

13. Dachreling (12) nach Anspruch 11, **dadurch gekennzeichnet, dass** ein Winkel zwischen der Ebene, die den Winkel (2α) zwischen der ersten und der zweiten lasttragenden Oberfläche (24, 25) der V-förmigen Nut oder des V-förmigen Vorsprungs (26) der Dachreling (12) halbiert, und einer Ebene, die an einer Berührungsstelle zwischen dem V-förmigen Vorsprung (26) oder der V-förmigen Nut des Klemmelements (34) und der V-förmigen Nut oder dem V-förmigen Vorsprung (26) der Dachreling (12) der Tangente (46) des kreisförmigen Wegs (44) folgt, gebildet bei einem seitlichen Querschnitt der Dachreling (12), kleiner als 5° ist.

14. Dachreling (12) nach einem der vorhergehenden Ansprüche, **dadurch gekennzeichnet, dass** sie eine Längsausdehnung L und eine Querausdehnung T, die sich zwischen einer ersten Seitenwand (18) und einer zweiten Seitenwand (20) erstreckt, aufweist und in der ersten Seitenwand (18) einen ausgesparten Unterschnitt (22) enthält, wobei der ausgesparte Unterschnitt (22) die V-förmige Nut bildet und eine erste lasttragende Oberfläche (24) umfasst, die wenigstens teilweise innerhalb der Begrenzungen der maximalen Querausdehnung, Tₘₐₓ, desjenigen Teils der Dachreling (12) verläuft, der sich mit dem ausgesparten Unterschnitt (22) überlappt, wenn die Dachreling (12) an einem Fahrzeug (10) montiert ist.

15. Dachreling (12) nach einem der vorhergehenden Ansprüche, **dadurch gekennzeichnet, dass** die lasttragende Oberfläche (24) der im Wesentlichen V-förmigen Nut oder des im Wesentlichen V-förmigen Vorsprungs (26) so ausgelegt ist, dass sie in Bezug auf die Horizontalebene des Fahrzeugs vertikal geneigt ist, wenn die Dachreling (12) an einem Fahrzeug (10) montiert ist.

16. Dachreling (12) nach Anspruch 14, **dadurch gekennzeichnet, dass** die erste Seitenwand (18) so ausgelegt ist, dass sie sich der Mitte (C) des Dachs (14) des Fahrzeugs (10) am nächsten befindet.

17. Dachreling (12) nach Anspruch 14, **dadurch gekennzeichnet, dass** sich die erste lasttragende Oberfläche (24) im Wesentlichen in derselben Höhe an der Dachreling (12) wie die Aufnahmemittel (28) befindet.

18. Dachreling (12) nach einem der vorhergehenden Ansprüche, **dadurch gekennzeichnet, dass** die erste lasttragende Oberfläche (24) der im Wesentlichen V-förmigen Nut oder des im Wesentlichen V-förmigen Vorsprungs (26) wenigstens entlang eines Teils der Länge der Dachreling (12) oder vorzugsweise im Wesentlichen entlang der gesamten Länge der Dachreling (12) verläuft.

19. Dachreling (12) nach einem der vorhergehenden Ansprüche, **dadurch gekennzeichnet, dass** die V-förmige Nut oder der V-förmige Vorsprung (26) auf gekrümmte/nichtlineare Weise entlang der Länge und/oder der Breite der Dachreling (12) verläuft.

20. Dachreling (12) nach einem der vorhergehenden Ansprüche, **dadurch gekennzeichnet, dass** sie dafür ausgelegt ist, sich in dem Bereich, in dem das Dach des Fahrzeugs mit den Seitenplattenelementen des Fahrzeugs verbunden ist, in einem Kanal zu befinden, wenn sie in einem Fahrzeug (10) montiert ist.

21. Dachreling (12) nach einem der vorhergehenden Ansprüche, **dadurch gekennzeichnet, dass** die im Wesentlichen V-förmige Nut abgerundet ist oder eine Form aufweist, die zwischen der Oberfläche bzw. den Oberflächen eines Vorsprungs (26) und den Oberflächen der im Wesentlichen V-förmigen Nut wenigstens zwei Berührungsflächen entstehen lässt, wenn ein Dachträger (16) oder das Klemmelement (34) an der Dachreling (12) angebracht ist.

22. Klemmelement (34) zum Anbringen einer Last (16, 36) an einer Dachreling (12) nach einem der vorhergehenden Ansprüche, **dadurch gekennzeichnet, dass** das Klemmelement (34) einen ersten Schenkel umfasst, der ein distales Ende aufweist, das einen im Wesentlichen V-förmigen Vorsprung (26) wie etwa einen keilförmigen Vorsprung (26) oder eine im Wesentlichen V-förmige Nut, die eine untere, nach unten weisende Oberfläche (26a) und eine obere, nach oben weisende Verriegelungsoberfläche (26b) aufweist, umfasst, wobei der Vorsprung (26) oder die Nut dafür ausgelegt ist, zu einer entsprechenden im Wesentlichen V-förmigen Nut oder zu einem entsprechenden im Wesentlichen V-förmigen Vorsprung (26) der Dachreling (12) zu passen.

23. Klemmelement (34) nach Anspruch 22, **dadurch gekennzeichnet, dass** es einen zweiten Schenkel (30) umfasst, der dafür ausgelegt ist, das Klemmelement (34) an die Dachreling (12) zu klemmen.

24. Klemmelement (34) nach Anspruch 23, **dadurch gekennzeichnet, dass** es Spannmittel (32) wie etwa ein Gewindeelement zum Einstellen der Entfernung zwischen dem ersten und dem zweiten Schenkel umfasst.

25. Klemmelement (34) nach einem der Ansprüche 22-24, **dadurch gekennzeichnet, dass** es Mittel (38) zum Anbringen des Klemmelements (34) an einem Gegenstand (36) umfasst.

26. Dachträger (16) für ein Fahrzeug zur Verwendung mit einer Dachreling (12) nach einem der vorhergehenden Ansprüche, **dadurch gekennzeichnet, dass** er ein Klemmelement (34) nach einem der Ansprüche 22-25 umfasst.

27. Dachträger (16) nach Anspruch 26, **dadurch gekennzeichnet, dass** das Klemmelement (34) einteilig mit dem Dachträger (16) gebildet ist.

28. Fahrzeug (10), **dadurch gekennzeichnet, dass** es eine Dachreling (12) nach einem der Ansprüche 1-21, ein Klemmelement (34) nach einem der Ansprüche 22-25 oder einen Dachträger nach Anspruch 26 oder 27 umfasst.

## Revendications

1. Rail de toit (12) pour véhicule (10), lequel rail de toit (12) est agencé pour supporter au moins une partie du poids d'une barre de toit (16), c'est-à-dire une partie de n'importe quel châssis, pied, grille ou récipient, qui est fixé(e) sur le toit d'un véhicule (10) sur lequel ou dans lequel des articles peuvent être placés ou auquel des articles peuvent être attachés, dans lequel le rail de toit (12) comprend une rainure substantiellement en forme de V qui est agencée pour recevoir une protubérance correspondante (26), comme une protubérance en forme de coin, sur un élément de serrage (34) d'une barre de toit (16), ou bien le rail de toit (12) comprend une protubérance substantiellement en forme de V qui est agencée pour être insérée dans une rainure substantiellement en V correspondante sur l'élément de serrage (34) d'une barre de toit (16) ;
ladite rainure en V ou protubérance en V (26) sur/dans le rail de toit (12) formant une première et une deuxième surface de support de charge (24, 25) agencées pour s'accoupler avec des surfaces correspondantes présentes sur ledit élément de serrage (34), **caractérisé en ce que**
lesdites première et deuxième surfaces de support de charge (24, 25) sont inclinées en formant un angle inférieur à 90° l'une par rapport à l'autre, et **en ce que** ladite rainure en V dudit rail de toit (12) est agencée pour recevoir librement ladite protubérance en V (26) dudit élément de serrage (34) ou ladite protubérance en V dudit rail de toit (12) est agencée pour être librement insérée dans ladite rainure dudit élément de serrage (34), de sorte que substantiellement toute la force de serrage exercée par ledit élément de serrage (34) sur ledit rail de toit (12) est exercée sur lesdites première et deuxième surfaces de support de charge (24, 25) de ladite rainure ou de ladite protubérance (26), et ladite première surface de support de charge (24) de la rainure ou protubérance substantiellement en forme de V (26) est inclinée selon un angle de 1 à 45° par rapport au plan horizontal dudit véhicule quand le rail de toit (12) est monté sur un véhicule (10).

2. Rail de toit (12) selon la revendication 1, **caractérisé en ce que** lesdites première et deuxième surfaces de support de charge (24, 25) sont inclinées d'un angle de 15 à 60° l'une par rapport à l'autre.

3. Rail de toit (12) selon la revendication 1 ou 2, **caractérisé en ce que** ladite rainure en V dudit rail de toit (12) est agencée pour recevoir librement ladite protubérance en V (26) dudit élément de serrage (34) ou ladite protubérance en V (26) dudit rail de toit (12) est agencée pour être librement insérée dans ladite rainure dudit élément de serrage (34) de telle manière que 80 % au moins de la force de serrage exercée par ledit élément de serrage (34) sur ledit rail de toit (12) est exercée sur lesdites surfaces de support de charge (24, 25) de ladite rainure ou de ladite protubérance (26).

4. Rail de toit (12) selon la revendication 1 ou 2, **caractérisé en ce que** ladite rainure en V dudit rail de toit (12) est agencée pour recevoir librement ladite protubérance en V (26) dudit élément de serrage (34) ou ladite protubérance en V (26) dudit rail de toit (12) est agencée pour être librement insérée dans ladite rainure dudit élément de serrage (34) de telle manière que 90 % au moins de la force de serrage exercée par ledit élément de serrage (34) sur ledit rail de toit (12) est exercée sur lesdites surfaces de support de charge (24, 25) de ladite rainure ou de ladite protubérance (26).

5. Rail de toit (12) selon la revendication 1 ou 2, **caractérisé en ce que** ladite rainure en V dudit rail de toit (12) est agencée pour recevoir librement ladite protubérance en V (26) dudit élément de serrage (34) ou ladite protubérance en V (26) dudit rail de toit (12) est agencée pour être librement insérée dans ladite rainure dudit élément de serrage (34) de telle manière que 95 % au moins de la force de serrage exercée par ledit élément de serrage (34) sur ledit rail de toit (12) est exercée sur lesdites surfaces de support de charge (24, 25) de ladite rainure ou de ladite protubérance (26).

6. Rail de toit (12) selon l'une quelconque des revendications précédentes, **caractérisé en ce que** ladite rainure en V ou ladite protubérance (26) dudit rail de toit (12) est positionnée sur un premier côté du rail de toit (12) pour se mettre en prise avec ladite protubérance (26) ou rainure agencée sur une première branche dudit élément de serrage (34) et **en ce qu'**une piste (40) est agencée sur un côté opposé dudit rail de toit (12) pour se mettre en prise avec un élément de maintien placé sur une deuxième branche d'un élément de serrage (34).

7. Rail de toit (12) selon la revendication 6, **caractérisé en ce que** ladite protubérance (26) ou rainure agencée sur une première branche dudit élément de serrage (34) est formée de façon à être le seul point de contact entre le rail de toit (12) et l'élément de serrage (34) sur ledit premier côté du rail de toit (12) qui est au point d'accouplement de ladite rainure et de ladite protubérance (26), de sorte que substantiellement tout la force de serrage exercée par ledit élément de serrage (34) sur ledit rail de toit (12) est exercée sur lesdites surfaces de support de charge (24, 25) de ladite rainure ou de ladite protubérance (26).

8. Rail de toit (12) selon la revendication 6 ou 7, **caractérisé en ce que** ladite piste (40) est positionnée substantiellement dans un plan qui réalise la bissection de l'angle (2α) formé par lesdites première et deuxième surfaces de support de charge (24, 25) de la rainure ou protubérance en V (26) dudit rail de toit (12).

9. Rail de toit (12) selon la revendication 6 ou 7, **caractérisé en ce que** ladite piste (40) est positionnée à moins de 10° d'un plan qui réalise la bissection de l'angle (2α) formé par lesdites première et deuxième surfaces de support de charge (24, 25) de la rainure ou protubérance en V (26) dudit rail de toit (12) mesuré du fond de la rainure en V ou du sommet de la protubérance en V (26) dudit rail de toit (12) à l'emplacement de la piste (40).

10. Rail de toit (12) selon la revendication 6 ou 7, **caractérisé en ce que** ladite piste (40) est positionnée à moins de 5° d'un plan qui réalise la bissection de l'angle (2α) formé par lesdites première et deuxième surfaces de support de charge (24, 25) de la rainure ou protubérance en V (26) dudit rail de toit (12) mesuré du fond de la rainure en V ou du sommet de la protubérance en V (26) dudit rail de toit (12) à l'emplacement de la piste (40).

11. Rail de toit (12) selon la revendication 6 ou 7, **caractérisé en ce que** ledit rail de toit (12) est adapté pour être connecté à un élément de serrage (34) ayant un point de pivotement P pour ladite première branche, dans lequel lors de la fixation de l'élément de serrage (34) sur le rail de toit (12), la protubérance en V (26) ou la rainure en V de l'élément de serrage (34) suit un chemin circulaire (44), dans lequel ladite adaptation consiste à mettre le plan qui réalise la bissection de l'angle (2α) formé par les première et deuxième surfaces de support de charge (24, 25) de la rainure ou protubérance en V (26) dudit rail de toit (12) en position substantiellement coplanaire avec un plan qui suit la tangente (46) du chemin circulaire (44) au niveau d'une position de contact entre la protubérance en V (26) ou la rainure en V de l'élément de serrage (34) et la rainure ou protubérance en V (26) dudit rail de toit (12).

12. Rail de toit (12) selon la revendication 11, **caractérisé en ce qu'**un angle formé par ledit plan qui réalise la bissection de l'angle (2α) formé par les première et deuxième surfaces de support de charge (24, 25) de la rainure ou protubérance en V (26) dudit rail de toit (12) et un plan qui suit la tangente (46) du chemin circulaire (44) au niveau d'une position de contact entre la protubérance en V (26) ou la rainure en V de l'élément de serrage (34) et la rainure ou protubérance en V (26) dudit rail de toit (12), prise au niveau d'une section transversale latérale dudit rail de toit (12), est inférieur à 10°.

13. Rail de toit (12) selon la revendication 11, **caractérisé en ce qu'**un angle formé par ledit plan qui réalise la bissection de l'angle (2α) formé par les première et deuxième surfaces de support de charge (24, 25) de la rainure ou protubérance en V (26) dudit rail de toit (12) et un plan qui suit la tangente (46) du chemin circulaire (44) au niveau d'une position de contact entre la protubérance en V (26) ou la rainure en V de l'élément de serrage (34) et la rainure ou protubérance en V (26) dudit rail de toit (12), prise au niveau d'une section transversale latérale dudit rail de toit (12), est inférieur à 5°.

14. Rail de toit (12) selon l'une quelconque des revendications précédentes, **caractérisé en ce qu'**il a une étendue longitudinale L et une étendue transversale T qui s'étend entre une première paroi latérale (18) et une deuxième paroi latérale (20) et comprend un dégagement en retrait (22) dans la première paroi latérale (18), lequel dégagement en retrait (22) forme ladite rainure en V et comprend une première surface de support de charge (24) qui s'étend au moins en partie dans les limites de l'étendue transversale maximale, Tₘₐₓ, de la partie du rail de toit (12) qui est en chevauchement avec ledit dégagement en retrait (22) quand le rail de toit (12) est monté sur un véhicule (10).

15. Rail de toit (12) selon l'une quelconque des revendications précédentes, **caractérisé en ce que** ladite surface de support de charge (24) de la rainure ou protubérance substantiellement en forme de V (26) est agencée pour être inclinée verticalement par rapport au plan horizontal dudit véhicule quand le rail de toit (12) est monté sur un véhicule (10).

16. Rail de toit (12) selon la revendication 14, **caractérisé en ce que** ladite première paroi latérale (18) est agencée pour être située au plus près du centre (C) du toit (14) du véhicule (10).

17. Rail de toit (12) selon la revendication 14, **caractérisé en ce que** ladite première surface de support de charge (24) est située substantiellement à la même hauteur sur le rail de toit (12) qu'un moyen récepteur (28).

18. Rail de toit (12) selon l'une quelconque des revendications précédentes, **caractérisé en ce que** ladite première surface de support de charge (24) de la rainure ou protubérance substantiellement en forme de V (26) s'étend le long d'au moins une partie de la longueur du rail de toit (12) ou de préférence substantiellement le long de toute la longueur du rail de toit (12).

19. Rail de toit (12) selon l'une quelconque des revendications précédentes, **caractérisé en ce que** ladite rainure ou protubérance en V (26) s'étend de façon courbée/non linéaire le long de la longueur et/ou de la largeur dudit rail de toit (12).

20. Rail de toit (12) selon l'une quelconque des revendications précédentes, **caractérisé en ce qu'**il est agencé pour être situé dans un canal, dans la région où le toit du véhicule est relié aux panneaux latéraux du véhicule, quand il est monté dans un véhicule (10).

21. Rail de toit (12) selon l'une quelconque des revendications précédentes, **caractérisé en ce que** ladite rainure substantiellement en forme de V est arrondie, ou a une forme qui crée au moins deux surfaces de contact entre la ou les surface(s) d'une protubérance 26) et les surfaces de la rainure substantiellement en V quand une barre de toit (16) ou un élément de serrage (34) est attaché(e) au rail de toit (12).

22. Elément de serrage (34) pour attacher une charge (16, 36) à un rail de toit (12) selon l'une quelconque des revendications précédentes, **caractérisé en ce que** l'élément de serrage (34) comprend une première branche ayant une extrémité distale comprenant une protubérance substantiellement en forme de V (26), comme une protubérance en forme de coin (26), ou une rainure substantiellement en forme de V ayant une surface inférieure tournée vers le bas (26a) et une surface de blocage supérieure tournée vers le haut (26b), moyennant quoi ladite protubérance (26) ou ladite rainure est adaptée pour s'accoupler avec une rainure substantiellement en forme de V ou une protubérance substantiellement en forme de V (26) correspondante dudit rail de toit (12).

23. Elément de serrage (34) selon la revendication 22, **caractérisé en ce qu'**il comprend une deuxième branche (30) qui est agencée pour serrer ledit élément de serrage (34) sur ledit rail de toit (12).

24. Elément de serrage (34) selon la revendication 23, **caractérisé en ce qu'**il comprend un moyen de tension (32), comme un élément fileté, pour régler la distance qui sépare lesdites première et deuxième branches.

25. Elément de serrage (34) selon l'une quelconque des revendications 22 à 24, **caractérisé en ce qu'**il comprend un moyen (38) pour attacher l'élément de serrage (34) à un objet (36).

26. Barre de toit (16) pour véhicule destinée à être utilisée avec un rail de toit (12) selon l'une quelconque des revendications précédentes, **caractérisée en ce qu'**elle comprend un élément de serrage (34) selon l'une quelconque des revendications 22 à 25.

27. Barre de toit (16) selon la revendication 26, **caractérisée en ce que** ledit élément de serrage (34) est formé d'un seul tenant avec la barre de toit (16).

28. Véhicule (10), **caractérisé en ce qu'**il comprend un rail de toit (12) selon l'une quelconque des revendications 1 à 21, un élément de serrage (34) selon l'une quelconque des revendications 22 à 25 ou une barre de toit selon la revendication 26 ou 27.
